# EUROPEAN PATENT APPLICATION

(11) **EP 4 607 054 A1**
(43) Date of publication of application: **27.08.2025**
(21) Application number: 23893585.2
(22) Date of filing: 31.10.2023
(51) Int. Cl.: F16D 65/56, F16D 65/14, F16D 55/00, F16D 121/24

(54) **ELECTROMECHANICAL BRAKE CALIPER AND BRAKE SYSTEM**

(30) Priority: 23.11.2022 CN 202211478049
(71) Applicant: Bethel Automotive Safety Systems Co., Ltd., Wuhu, Anhui 241009 (CN)
(72) Inventor: GUO, Fengliang, Wuhu, Anhui 241009 (CN); YE, Yixing, Wuhu, Anhui 241009 (CN); ZHU, Yuancheng, Wuhu, Anhui 241009 (CN); ZHAO, Licheng, Wuhu, Anhui 241009 (CN); LI, Yundong, Wuhu, Anhui 241009 (CN)
(74) Representative: Canzler & Bergmeier Patentanwälte Partnerschaft mbB
(86) International application number: PCT/CN2023/128788
(87) International publication number: WO 2024/109494

(57) **Abstract**

An electromechanical brake caliper and a brake system, which relate to the technical field of brake calipers. The electromechanical brake caliper comprises an actuator, a motion conversion mechanism (4) and a brake caliper body (5), wherein the actuator comprises an outer casing (1), and an electric motor (2) and a reduction gear mechanism (3), which are arranged inside, an output shaft of the electric motor (2) being connected to the brake caliper body (5) via the reduction gear mechanism (3) and the motion conversion mechanism (4). The electromechanical brake caliper further comprises an elastic return mechanism, which is configured to store energy during a brake clamping process and to enable a component connected to the brake caliper body (5) to return during a brake release process, and which is arranged on a transmission path of the brake caliper body (5). The electromechanical brake caliper replaces a rectangular sealing ring in a hydraulic brake caliper, and has a mechanical active return function, so that the clearance between a brake pad and a brake disc (17) is within a rational clearance range.

## Description

### Technical Field

The present disclosure relates to the technical field of brake calipers, in particular to an electro-mechanical brake caliper and a braking system.

### Background

Along with the electrification of vehicles, brake-by-wire systems have gradually become a major development trend in the automotive industry. As one of the brake-by-wire systems, an electro-mechanical braking (EMB) system adopts a wheel-end motor for direct drive, the torque and rotational motion of the motor are converted into the thrust and translational motion of a connecting member through a motion conversion mechanism, and brake pads are pushed to clamp a brake disc, so as to obtain a braking force. Meanwhile, as an emerging braking system, electro-mechanical braking abandons large-volume components such as vacuum boosters and hydraulic pipelines, such that the layout of a chassis of a whole vehicle is simpler and more flexible. Electro-mechanical braking also has advantages such as fast and accurate pressure adjustment, and the braking performance of the whole vehicle is dramatically improved.

The existing hydraulic brake calipers employ a rectangular sealing ring to return a lead screw nut in a motion conversion mechanism to a reasonable position. However, a return process of an electronic dry brake should overcome the resistance of a motor and the resistance of a multi-stage transmission mechanism, the resistance is much greater than that of a hydraulic brake caliper, and the originally designed rectangular sealing ring can no longer meet the requirement of the return of a piston of the electronic dry brake.

The existing electro-mechanical brake calipers complete the return of the lead screw nut (piston) to a reasonable position through electronic control, and a problem that arises is that judgment of a clamping force will be subject to various interferences, for example, the interference of an inertial force. Specific principles lie in that according to Newton's second law, a force is equal to the mass multiplied by the acceleration or deceleration (an acceleration condition of a whole vehicle or an energy recovery condition). If the whole vehicle is not stationary or at a constant speed, additional inertial forces will occur, and an electronic control system will misjudge due to the acceleration or deceleration of the whole vehicle during driving, thereby leading to a risk of inability of returning to a reasonable position (a clearance between the brake pad and the brake disc is an initial clearance).

The patent with a publication number of CN115217871A discloses an electro-mechanical brake caliper, a braking system, an automobile, and a design method. The electro-mechanical brake caliper includes a housing, a brake disc, a brake pad, and an actuation assembly. The actuation assembly includes a motor and a transmission mechanism, the motor includes a stator and a rotor, the rotor surrounds a periphery of the transmission mechanism, the rotor is in transmission connection with a power input end of the transmission mechanism, the transmission mechanism can convert a rotary motion of a power input end into a linear motion of a power output end, and the power output end of the transmission mechanism performs a linear motion to drive the brake pad to abut against the brake disc. Although the electro-mechanical brake caliper has a compact structure and occupies little space, the return of the piston is still completed through electronic control, and the problem that the piston is unable to return to its initial position during returning still cannot be solved.

### Summary

The present disclosure provides an electro-mechanical brake caliper and a braking system which eliminates the need for a rectangular sealing ring used in a hydraulic brake caliper by implementing a mechanical active return function, thereby maintaining a clearance between a brake pad and a brake disc within a reasonable range.

The electro-mechanical brake caliper includes an actuator, a motion conversion mechanism, and a brake caliper body. The actuator includes an outer housing and a motor and a reduction gear mechanism arranged inside the outer housing, an output shaft of the motor is connected to the brake caliper body through the reduction gear mechanism and the motion conversion mechanism, the electro-mechanical brake caliper further includes an elastic return mechanism configured to store energy during a brake clamping process and to make components connected to the brake caliper body return to their original positions during a brake releasing process, and the elastic return mechanism is arranged on a transmission path of the brake caliper body.

Preferably, the elastic return mechanism includes a mounting space and an elastic member and an intermediate member arranged inside the mounting space, and the elastic member is connected to a transmission member of the reduction gear mechanism or the motion conversion mechanism via the intermediate member.

Preferably, an inner wall of the brake caliper body is provided with the mounting space, and the mounting space is a first annular groove with an inward opening; the intermediate member is arranged at one end, away from brake pads, in the mounting space, the intermediate member is tightly connected to a lead screw nut of the motion conversion mechanism, and the elastic member is sleeved with the lead screw nut.

Preferably, the intermediate member is a clamping sleeve, and one end of the clamping sleeve is provided with a limiting boss that is in snap-fit connection with the elastic member.

Preferably, the elastic member is axially compressible for energy storage, and it may include a wave spring and a cylindrical helical spring.

Preferably, the outer housing includes a rear end cover covering a surface of the reduction gear mechanism; the mounting space includes a positioning space formed between the rear end cover and the reduction gear mechanism for arranging the elastic member; and two ends of the elastic member are respectively connected to the rear end cover through limiting posts to maintain an initial energy storage capacity.

Preferably, the positioning space includes an accommodating groove arranged on an end face of at least one gear of the reduction gear mechanism or on the rear end cover.

Preferably, the mounting space further includes a second annular groove arranged at the center of at least one gear of the reduction gear mechanism, the intermediate member includes an intermediate shifting ring tightly connected to an inner cylinder of the second annular groove, and the intermediate shifting ring abuts against one end of the elastic member.

Preferably, the elastic member is circumferentially compressible for energy storage, and it may include a coil spring and an arc-shaped helical spring.

The present disclosure further provides a braking system, including the electro-mechanical brake caliper described above.

The present disclosure has the following beneficial effects:

In the present disclosure, through setting an elastic return mechanism including a mounting space, an elastic member and an intermediate member on a transmission path of the brake caliper body, the electro-mechanical brake caliper has a function of mechanical active return, and the function includes:
1) During a brake clamping process, an elastic member stores energy; while during a brake releasing process, under the constraint of the mounting space and a pushing action of the stored energy of the elastic member, the elastic member can drive the piston to return to an initial position, thereby keeping a clearance between the brake pad and the brake disc within a reasonable range. There is no need to electronically control to search for a point where the clamping force is zero, thereby reducing the burden on the electronic control hardware and calculation, and reducing the overall cost of the electronic dry brake.
2) During a brake clamping process, when a main motor de-energizes and fails, since the elastic member can store energy and generate a reverse force, the residual force generated due to de-energization of the main motor is released.
3) Due to brake wear, the brake pads and brake disc will be consumed as a braking system operates. During the brake clamping process, when the elastic member stores the maximum energy, the position of the elastic member relative to the transmission member can be changed, such that the position is self-adjusted with the loss of the brake pads and brake disc, thereby ensuring that a clearance between the brake pad and the brake disc during brake clamping is in a reasonable range in the case of brake wear.

### Brief Description of the Drawings

The following is a brief description of contents expressed in each of the drawings and reference numerals in the drawings in the specification of the present disclosure:
FIG. 1 is a structural schematic diagram of Embodiment 1 of the present disclosure.
FIG. 2 is an exploded view of combination of an elastic member and an intermediate member in FIG. 1.
FIG. 3 is a structural schematic diagram of Embodiment 2 of the present disclosure.
FIG. 4 is an exploded view of FIG. 3.
FIG. 5 is a structural schematic diagram showing connection between an elastic member and a rear end cover in FIG. 4.
FIG. 6 is a structural schematic diagram of Embodiment 3 of the present disclosure.
FIG. 7 is an exploded view of FIG. 6.

Reference numerals in the Figures: 1. outer housing, 1-1. rear end cover, 2. motor, 3. reduction gear mechanism, 3-1. first output gear, 3-2. duplex gear, 3-3. second output gear, 4. motion conversion mechanism, 4-1. lead screw shaft, 4-2. lead screw nut, 5. brake caliper body, 6. first annular groove, 7. clamping sleeve, 7-1. limiting boss, 8. elastic member, 9. limiting post, 10. accommodating groove, 11. second annular groove, 12. intermediate shifting ring, 13. extrusion sleeve, 14. inner brake pad, 15. caliper, 16. outer brake pad, 17. brake disc.

### Detailed Description

To make the objectives, technical solutions, and advantages of the embodiments of the present disclosure clearer, the technical solutions in the embodiments will be clearly and completely described below in combination with the accompanying drawings in the embodiments of the present disclosure. The following embodiments are used to illustrate the present disclosure, rather than limiting the scope of the present disclosure.

In the description of the present disclosure, it should be noted that the orientation or positional relationships indicated by the terms "upper", "lower", "front", "rear", "left", "right", "vertical", "inner", "outer" and the like are based on the orientation or positional relationships shown in the accompanying drawings. The terms are merely for the convenience of describing the present disclosure and simplifying the description, rather than indicating or implying that the device or element referred to must have a specific orientation, or must be constructed and operated in a specific orientation. Therefore, the terms should not be construed as a limitation to the present disclosure.

In the description of the present disclosure, it should be noted that, unless otherwise clearly specified and limited, the terms "mounting", "connected", and "connection" should be understood in a broad sense. For example, the connection may be a fixed connection, a detachable connection, or an integral connection; the connection may be a mechanical connection or an electrical connection; and the connection may be a direct connection or an indirect connection through an intermediate medium. For those skilled in the art, the specific meanings of the above terms in the present disclosure can be understood according to specific situations.

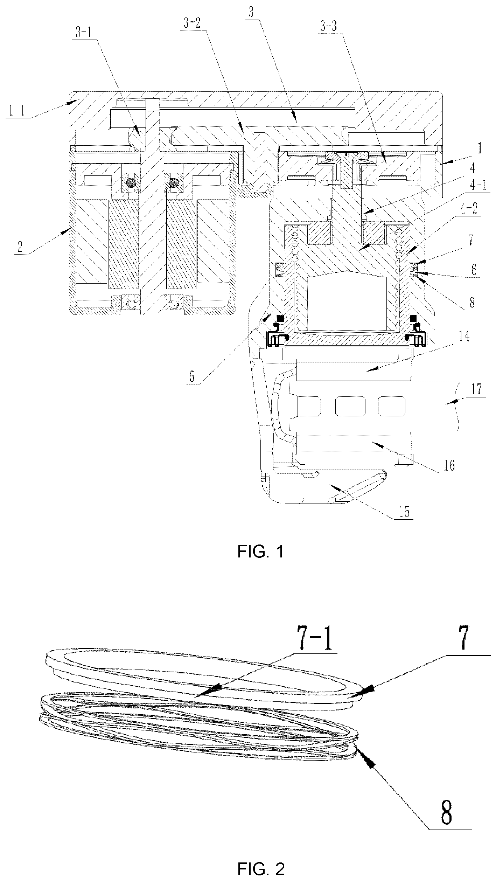

As shown in FIGs. 1 to 7, the present disclosure provides an electro-mechanical brake caliper, including an actuator, a motion conversion mechanism 4 and a brake caliper body 5. The actuator includes an outer housing 1 and a motor 2 and a reduction gear mechanism 3 arranged inside the outer housing 1. An output shaft of the motor 2 is connected to the brake caliper body 5 through the reduction gear mechanism 3 and the motion conversion mechanism 4. Specifically, the reduction gear mechanism 3 includes a first output gear 3-1, a duplex gear 3-2, and a second output gear 3-3. The duplex gear 3-2 includes a large gear and a small gear arranged coaxially, the first output gear 3-1 is connected to an output shaft of the motor 2, the first output gear 3-1 is engaged with the large gear, the small gear is engaged with the second output gear 3-3, and the second output gear 3-3 is connected to the motion conversion mechanism 4. The motion conversion mechanism 4 includes a lead screw shaft 4-1 connected to the second output gear 3-3, a lead screw nut 4-2 is mounted outside the lead screw shaft 4-1, the lead screw nut 4-2 is connected to an inner brake pad 14, a caliper 15 is arranged on the brake caliper body 5, an outer brake pad 16 is mounted on the caliper, a brake disc 17 is arranged between the outer brake pad 16 and the inner brake pad 14, and the motor 2 acts to drive the lead screw shaft 4-1 to rotate, such that the lead screw nut 4-2 moves axially along the lead screw shaft 4-1, so as to drive the inner brake pad 14 to approach the brake disc 17, and enable the inner brake pad 14 and the outer brake pad 16 to clamp the brake disc 17 to achieve braking.

The above electro-mechanical brake caliper also includes an elastic return mechanism configured to store energy during a brake clamping process and to make components connected to the brake caliper body 5 return to their original positions during a brake releasing process, and the elastic return mechanism is arranged on a transmission path of the brake caliper body 5. The transmission path includes at least one gear of the reduction gear mechanism 3, the motion conversion mechanism 4, or the brake caliper body 5.

The elastic return mechanism includes a mounting space and an elastic member 8 and an intermediate member arranged inside the mounting space, and the elastic member 8 is connected to the transmission member of the reduction gear mechanism 3 or the motion conversion mechanism 4 via the intermediate member. The intermediate member functions to follow the transmission member of the reduction gear mechanism 3 or the motion conversion mechanism 4 to act during brake clamping, such that the elastic member 8 is compressed to store energy. When the brake clamping is released, the compressed elastic member 8 for energy storage pushes the transmission member to return to its initial position. The mounting space functions to provide a mounting space for the elastic member 8 and the intermediate member on the one hand, and to limit the elastic member 8 from returning to its initial position on the other hand.

Moreover, a driving force generated by the transmission member during operation not only needs to overcome a friction force between the intermediate member and the transmission member, but also needs to overcome an extrusion force of the inner brake pad 14 on the lead screw nut 4-2 or a reverse torsional force between gears in the reduction gear mechanism 3. Therefore, the driving force generated by the transmission member during operation is greater than the friction force between the intermediate member and the transmission member, and the friction force between the intermediate member and the transmission member is equal to the maximum energy storage capacity of the elastic member 8 and the supporting force of the mounting space on the intermediate member. During brake clamping, the transmission member acts to drive the intermediate member to act synchronously and extrude the elastic member 8 for energy storage; after the elastic member 8 reaches its maximum energy storage capacity, the transmission member continues to act, and the intermediate member acts relative to the transmission member, and can automatically adjust the position of the intermediate member relative to the transmission member when the elastic member 8 reaches its maximum energy storage capacity. After the braking system retracts, a clearance between the brake pad and the brake disc can be restored to a reasonable range.

In the present disclosure, specific implementations are elaborated below through the following embodiments.

### Embodiment 1

As shown in FIGs. 1 and 2, an inner wall of the brake caliper body 5 is provided with a mounting space. The mounting space is a first annular groove 6 with an inward opening, and the intermediate member and the elastic member 8 are arranged in the first annular groove 6. Both the intermediate member and the elastic member 8 have an annular structure. The intermediate member may be a clamping sleeve 7. The elastic member 8 is axially compressible for energy storage, and it may be a wave spring or a cylindrical helical spring, etc. The clamping sleeve 7 is arranged at one end, away from a brake pad, of the first annular groove 6, and the elastic member 8 is arranged at one end, close to the brake pad, of the first annular groove 6. The elastic member 8 is sleeved with the lead screw nut 4-2, the clamping sleeve 7 is tightly connected to the lead screw nut 4-2 of the motion conversion mechanism 4, the friction force between the clamping sleeve 7 and the lead screw nut 4-2 is fixed, and one end of the clamping sleeve 7 is provided with a limiting boss 7-1 that is in snap-fit connection with the elastic member 8, thereby pushing the elastic member 8 to be compressed stably for energy storage.

The intermediate member and the elastic member 8 may be assembled as follows: first, the elastic member 8 is placed in the first annular groove 6, and the clamping sleeve 7 is placed at one end of the elastic member 8 that is away from the brake pad, such that the elastic member 8 is compressed in an initial state and has an initial energy storage capacity, and an upper end face of the clamping sleeve 7 contacts with and abuts against an upper end face of the first annular groove 6. Then, the motion conversion mechanism 4 is mounted in the brake caliper body 5, such that an outer wall surface of the lead screw nut 4-2 of the motion conversion mechanism 4 is tightly connected to an inner wall surface of the clamping sleeve 7.

The driving force generated by the lead screw nut 4-2 during operation is equal to the sum of a friction force between the clamping sleeve 7 and the lead screw nut 4-2, a deformation force of the brake caliper body 15, and an extrusion force of the inner brake pad 14 on the lead screw nut 4-2. The friction force between the clamping sleeve 7 and the lead screw nut 4-2 is equal to a maximum energy storage capacity of the elastic member 8 on the clamping sleeve 7 and a supporting force of the first annular groove 6 on the clamping sleeve 7. Since the driving force generated by the lead screw nut 4-2 during operation is greater than the friction force between the clamping sleeve 7 and the lead screw nut 4-2, and during brake clamping, the lead screw nut 4-2 acts to drive the clamping sleeve 7 to act synchronously and extrude the elastic member 8 for energy storage. After the elastic member 8 reaches a maximum energy storage capacity, at this time, the driving force drives the lead screw nut 4-2 to continue to act, and the clamping sleeve 7 acts relative to the transmission member, and can automatically adjust the position of the clamping sleeve 7 relative to the lead screw nut 4-2 (force balance position) when the elastic member 8 reaches its maximum energy storage position. After the braking system retracts, the lead screw nut 4-2 retracts to make the clearance between the brake pad and the brake disc to retract to a reasonable range.

The working principle of the elastic return mechanism of the above structure is as follows:
1. A brake clamping process: a brake pedal is depressed, the motor 2 rotates forwards, the reduction gear mechanism 3 drives the lead screw shaft 4-1 of the motion conversion mechanism 4 to rotate, such that the lead screw nut 4-2 acts axially along the lead screw shaft 4-1, and the brake pads gradually approach the brake disc. (1) When the clamping force is less than the maximum clamping force, since a friction force between the clamping sleeve 7 and the lead screw nut 4-2 is less than a driving force generated when the lead screw nut 4-2 operates, the elastic member 8 moves forwards by the same distance as the lead screw nut 4-2. (2) When the clamping force reaches the maximum clamping force, the lead screw nut 4-2 moves forwards by a distance A, and at the same time, the clamping sleeve 7 moves forwards by the distance A along with the lead screw nut 4-2. At this time, the elastic member 8 is compressed to store energy, so as to reach a maximum energy storage capacity, and maintain a clamping state with the maximum clamping force. Under the above two states (1) and (2), the clamping sleeve 7 does not slide relative to the lead screw nut 4-2.
2. A brake releasing process: the brake pedal is released, and the motor 2 rotates reversely, such that the lead screw nut 4-2 acts axially along the lead screw shaft 4-1, and the brake pads gradually move away from the brake disc. At this time, the lead screw nut 4-2 moves backwards by a distance A, and the clamping sleeve 7 moves backwards by the distance A along with the lead screw nut 4-2. At this time, the clamping sleeve 7 contacts with an upper end face of the first annular groove 6 and remains in an initial state.
3. When the brake disc and/or the brake pads are worn: with the wear of the brake pads and the brake disc, the lead screw nut 4-2 will move forwards by an additional wear amount distance B relative to the brake caliper body 5, that is, when the wear amount is B and when the maximum clamping force is reached, the lead screw nut 4-2 moves forwards by a distance of B+A relative to its initial position. Since an initial clearance between the clamping sleeve 7 and a lower end face of the first annular groove 6 is a distance between the upper end face and the lower end face of the first annular groove 6, the distance is set as A during initial design. After the lead screw nut 4-2 drives the clamping sleeve 7 to move forwards by a distance A, the clamping sleeve 7 does not move. During a process in which the lead screw nut 4-2 continues to move forwards by a wear amount distance B, the clamping sleeve 7 slides relative to the lead screw nut 4-2. The position of the clamping sleeve 7 relative to the lead screw nut 4-2 (the force balance position) is adjusted when the elastic member 8 stores the maximum energy, then the clamping sleeve 7 completes self-adjustment, that is, the wear amount distance is adjusted.
4. When the motor 2 is de-energized: during a brake clamping process, the motor 2 is de-energized and fails, at this time, an upward elastic force of the elastic member 8 axially acts on the clamping sleeve 7, and the clamping sleeve 7 is driven to move upwards, thereby driving the lead screw nut 4-2 to move upwards, causing the brake pads to return to original positions and releasing a clamping state of the brake disc.
5. When the brake pads are replaced: after the brake pads are worn to a limit distance, the brake pads of a vehicle need to be replaced. At this time, the lead screw nut 4-2 can be retracted by rotating the motor 2 reversely. Due to the limitation of the upper end face of the first annular groove 6, the clamping sleeve 7 stops after returning to an initial energy storage position, and the lead screw nut 4-2 continues to move upwards, and the brake pads can be replaced after the lead screw shaft 4-1 rotates back to the initial position.

### Embodiment 2

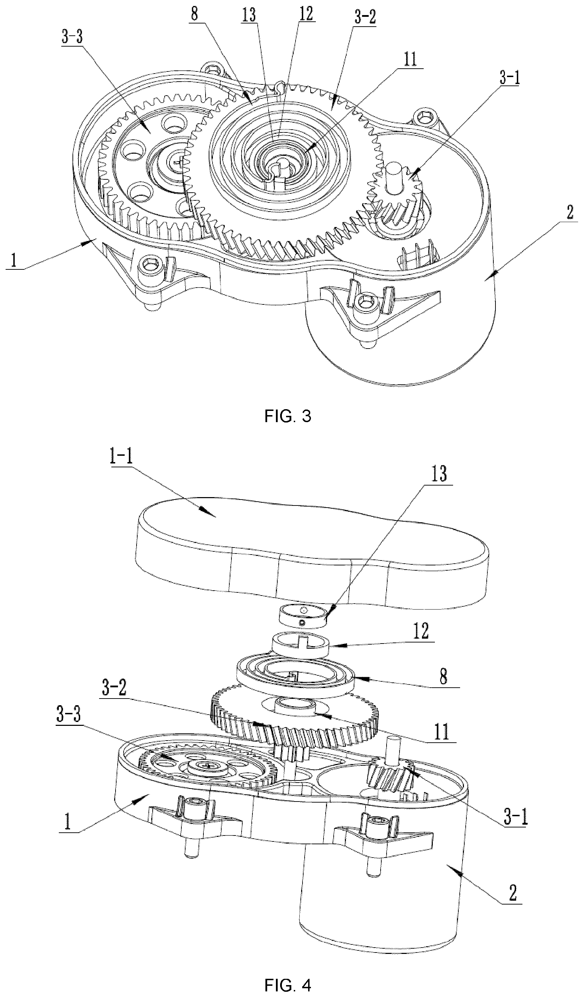

As shown in FIGs. 3 to 5, the outer housing 1 includes a rear end cover 1-1 covering the surface of the reduction gear mechanism 3. The mounting space includes a positioning space for arranging the elastic member 8 formed between the rear end cover 1-1 and the large gear of the duplex gear 3-2. The positioning space includes an accommodating groove 10 arranged on the rear end cover 1-1. The elastic member 8 can be positioned in the accommodating groove 10, and under the limitation of the duplex gear 3-2, the elastic member 8 can be prevented from disengagement. The elastic member 8 is set as an elastic member 8 that is circumferentially compressible for energy storage, such as a coil spring. Two limiting posts 9 are arranged in the accommodating groove 10. Both ends of the coil spring are respectively connected to the rear end cover 1-1 through the limiting posts 9 to maintain the initial energy storage capacity.

The mounting space also includes a second annular groove 11 arranged at a center of the large gear of the duplex gear 3-2. The intermediate member includes an intermediate shifting ring 12 tightly connected to the inner cylinder of the second annular groove 11. In order to ensure a stable friction force between the intermediate shifting ring 12 and the inner cylinder of the second annular groove 11, an extrusion sleeve 13 is sleeved on the inner cylinder of the second annular groove 11. Multiple bumps are circumferentially arranged on an inner wall of the extrusion sleeve 13, so as to ensure firm mounting of the extrusion sleeve 13. The extrusion sleeve 13 is tightly connected to the intermediate shifting ring 12, and the friction force between the extrusion sleeve 13 and the intermediate shifting ring 12 is stable. The intermediate shifting ring 12 extends circumferentially outwards to form a shifting rod section, and the shifting rod section abuts against one end of the coil spring. During brake clamping, the duplex gear 3-2 rotates to simultaneously drive the extrusion sleeve 13 and the intermediate shifting ring 12 to rotate synchronously, such that the shifting rod section pushes one end of the coil spring to continuously store energy in the coil spring. The extrusion sleeve 13 can also be removed as long as a stable friction force between the intermediate shifting ring 12 and the inner cylinder of the second annular groove 11 can be ensured.

The intermediate member and the elastic member 8 are assembled as follows: first, the coil spring is placed in the accommodating groove 10 on the rear end cover 1-1, and two ends of the coil spring are positioned by the two limiting posts 9 in the accommodating groove 10, such that the coil spring has an initial energy storage capacity at the beginning, thereby ensuring that when the gear rotates during brake clamping, the coil spring can start to store energy based on the initial energy storage; and then, the extrusion sleeve 13 and the intermediate shifting ring 12 are mounted in sequence from the inside to the outside on the inner cylinder of the second annular groove 11, such that the shifting rod section of the intermediate shifting ring 12 abuts against one end of the coil spring close to the center.

The torsional force generated when the duplex gear 3-2 rotates is equal to the sum of the friction force between the intermediate shifting ring 12 and the extrusion sleeve 13 (duplex gear 3-2) and the reverse torsional force of the first output gear 3-1 and the second output gear 3-3 on the duplex gear 3-2; and the friction force between the intermediate shifting ring 12 and the extrusion sleeve 13 (the duplex gear 3-2) is equal to the maximum energy storage capacity of the elastic member 8 and the supporting force of the limiting post 9 on the intermediate shifting ring 12 (the gravity of the intermediate shifting ring 12 is ignored). Since the torsional force generated when the duplex gear 3-2 rotates is greater than the friction force between the intermediate shifting ring 12 and the extrusion sleeve 13 (the duplex gear 3-2), during brake clamping, the duplex gear 3-2 rotates to drive the intermediate shifting ring 12 to act synchronously to extrude the coil spring for energy storage; and after the coil spring reaches its maximum energy storage capacity, the duplex gear 3-2 continues to act, and the intermediate shifting ring 12 acts relative to the extrusion sleeve 13, and can automatically adjust the position of the intermediate shifting ring 12 relative to the duplex gear 3-2 (force balance position) when the coil spring reaches its maximum energy storage capacity. After the braking system retracts, the duplex gear 3-2 rotates reversely, to make the clearance between the brake pad and the brake disc to retract to a reasonable range during brake clamping.

The working principle of the elastic return mechanism of the above structure is as follows:
1. A brake clamping process: during an initial state, the coil spring has an initially stored energy, and the shifting rod section of the intermediate shifting ring 12 abuts against one end of the coil spring close to the center. During the brake clamping process, a brake pedal is depressed, the motor 2 rotates forwards, and the reduction gear mechanism 3 acts to drive the motion conversion mechanism 4 to rotate, such that the brake pads approach the brake disc, at this time, the duplex gear 3-2 in the reduction gear mechanism 3 rotates, the intermediate shifting ring 12 drives the coil spring to rotate, and an additional energy is stored on the basis of the initially stored energy.
2. A brake releasing process: the brake pedal is released, and the motor 2 rotates reversely, such that the brake pads gradually move away from the brake disc. At this time, the duplex gear 3-2 rotates reversely, and the intermediate shifting ring 12 rotates synchronously. Since the shifting rod section of the intermediate shifting ring 12 abuts against one end of the coil spring close to the center, the coil spring releases its stored energy, until the end of the coil spring close to the center is clamped with one of the limiting posts 9, and the coil spring returns to its initial energy storage position.
3. When the brake disc and/or the brake pads are worn: with the wear of braking, the brake pads and the brake disc will be consumed as the braking system operates. At this time, the number of rotation circles of the duplex gear 3-2 relative to its initial position will be increased to achieve brake clamping. When the intermediate shifting ring 12 toggles the coil spring to reach the maximum energy storage position, the duplex gear 3-2 continues to rotate. At this time, the intermediate shifting ring 12 will rotate relative to the duplex gear 3-2. The stroke of relative rotation is an extra advancing distance due to wear, such that the maximum energy storage position of the coil spring can be adjusted when brake wear occurs.
4. When the motor 2 is de-energized: as the duplex gear 3-2 rotates clockwise and clamps, the intermediate shifting ring 12 toggles the coil spring and enables the coil spring to store energy again on the basis of the initial energy storage. When the motor 2 is de-energized and fails, the stored energy of the coil spring generates a counter-clockwise rotational force on the intermediate shifting ring 12, thereby pushing the duplex gear 3-2 to rotate counter-clockwise to release the residual force of the system, allowing the brake pads to return, and releasing a clamping state of the brake disc.
5. When the brake pads are replaced: after the brake pads are worn to a limit distance, the brake pads of a vehicle need to be replaced. At this time, the motor 2 can be rotated reversely to make the duplex gear 3-2 rotate counter-clockwise. When the intermediate shifting ring 12 is combined with one end of the coil spring close to the center, since the limiting post 9 on the rear end cover 1-1 has fixed this end, the intermediate shifting ring 12 cannot rotate at this time. As a result, the duplex gear 3-2 will rotate reversely relative to the intermediate shifting ring 12, and after rotating back to the initial position, the brake pads can be replaced.

### Embodiment 3

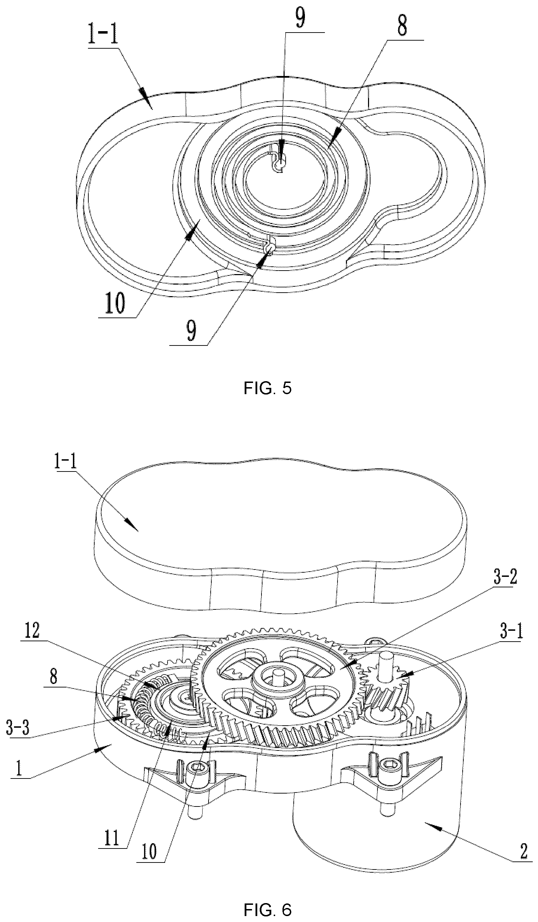

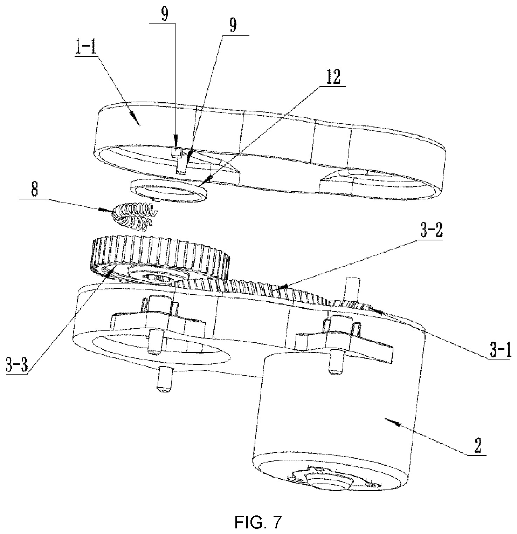

As shown in FIGs. 6 and 7, the difference from Embodiment 2 lies in that the elastic return mechanism is arranged on the second output gear 3-3, and the elastic member 8 is set as an arc-shaped helical spring, that is, the cylindrical helical spring is processed into an integral arc-shaped structure. The mounting space includes an accommodating groove 10 arranged on the second output gear 3-3 and a second annular groove 11 arranged at the center of the second output gear 3-3, the second annular groove 11 is concentrically arranged with the accommodating groove 10, an arc-shaped helical spring is placed in the accommodating groove 10, two limiting posts 9 are arranged on the rear end cover 1-1, and the two limiting posts 9 abut against two ends of the arc-shaped helical spring. An intermediate shifting ring 12 is mounted in the second annular groove 11, and the extrusion sleeve 13 can also be mounted as in the mounting structure in Embodiment 2.

The assembly method, working principle, and effects of the above elastic return mechanism are similar to those in Embodiment 2, and will not be repeated redundantly herein.

The present disclosure also provides a method of using an electro-mechanical brake caliper, including setting the elastic return mechanism in Embodiment 2 or Embodiment 3 on the first output gear 3-1 or the output shaft of the motor 2. The present disclosure also provides an electro-mechanical brake caliper, including the elastic return mechanism in Embodiment 1, Embodiment 2, or Embodiment 3, or a combination of any two of the above elastic return mechanisms.

As described above, the above is merely an illustration of some principles of the present disclosure using diagrams. This specification is not intended to limit the present disclosure to the specific structures and scope of application shown and described. Therefore, all the corresponding modifications and equivalents that may be utilized shall fall within the scope of the patent applied for by the present disclosure.

## Claims

1. An electro-mechanical brake caliper, comprising an actuator, a motion conversion mechanism, and a brake caliper body, wherein the actuator includes an outer housing and a motor and a reduction gear mechanism arranged inside the outer housing, an output shaft of the motor is connected to the brake caliper body through the reduction gear mechanism and the motion conversion mechanism, wherein the electro-mechanical brake caliper further comprises an elastic return mechanism configured to store energy during a brake clamping process and to make components connected to the brake caliper body return to their original positions during a brake releasing process, and the elastic return mechanism is arranged on a transmission path of the brake caliper body.

2. The electro-mechanical brake caliper according to claim 1, wherein the elastic return mechanism comprises a mounting space and an elastic member and an intermediate member arranged inside the mounting space, wherein the elastic member is connected to a transmission member of the reduction gear mechanism or the motion conversion mechanism via the intermediate member.

3. The electro-mechanical brake caliper according to claim 2, wherein an inner wall of the brake caliper body is provided with the mounting space, wherein the mounting space is a first annular groove with an inward opening; the intermediate member is arranged at one end in the mounting space that is away from brake pads, the intermediate member is tightly connected to a lead screw nut of the motion conversion mechanism, and the elastic member is sleeved with the lead screw nut.

4. The electro-mechanical brake caliper according to claim 3, wherein the intermediate member is a clamping sleeve, wherein one end of the clamping sleeve is provided with a limiting boss that is in snap-fit connection with the elastic member.

5. The electro-mechanical brake caliper according to claim 3, wherein the elastic member is axially compressible for energy storage, wherein the elastic member comprises a wave spring and a cylindrical helical spring.

6. The electro-mechanical brake caliper according to claim 2, wherein the outer housing comprises a rear end cover covering a surface of the reduction gear mechanism; the mounting space comprises a positioning space formed between the rear end cover and the reduction gear mechanism for arranging the elastic member; and two ends of the elastic member are respectively connected to the rear end cover through limiting posts to maintain an initial energy storage capacity.

7. The electro-mechanical brake caliper according to claim 6, wherein the positioning space comprises an accommodating groove arranged on an end face of at least one gear of the reduction gear mechanism or on the rear end cover.

8. The electro-mechanical brake caliper according to claim 6, wherein the mounting space further comprises a second annular groove arranged at the center of at least one gear of the reduction gear mechanism, wherein the intermediate member includes an intermediate shifting ring tightly connected to an inner cylinder of the second annular groove, wherein the intermediate shifting ring abuts against one end of the elastic member.

9. The electro-mechanical brake caliper according to claim 8, wherein an extrusion sleeve is sleeved on the inner cylinder of the second annular groove, wherein the extrusion sleeve is tightly connected to the intermediate shifting ring.

10. The electro-mechanical brake caliper according to claim 9, wherein an inner wall of the extrusion sleeve is provided with a plurality of bumps along a circumferential direction.

11. The electro-mechanical brake caliper according to claim 8, wherein the intermediate shifting ring extends outwards in a circumferential direction to form a shifting rod section, wherein the shifting rod section abuts against one end of the elastic member.

12. The electro-mechanical brake caliper according to claim 6, wherein the elastic member is circumferentially compressible for energy storage, wherein the elastic member comprises a coil spring and an arc-shaped helical spring.

13. The electro-mechanical brake caliper according to claim 1, wherein the transmission path comprises at least one gear of the reduction gear mechanism, the motion conversion mechanism, or the brake caliper body.

14. The electro-mechanical brake caliper according to claim 1, wherein the reduction gear mechanism comprises a first output gear, a duplex gear, and a second output gear, wherein the duplex gear includes a large gear and a small gear arranged coaxially, the first output gear is connected to an output shaft of the motor, the first output gear is engaged with the large gear, the small gear is engaged with the second output gear, and the second output gear is connected to the motion conversion mechanism.

15. The electro-mechanical brake caliper according to claim 14, wherein the motion conversion mechanism comprises a lead screw shaft connected to the second output gear, a lead screw nut is mounted outside the lead screw shaft, the lead screw nut is connected to an inner brake pad, a caliper is arranged on the brake caliper body, an outer brake pad is mounted on the caliper, a brake disc is arranged between the outer brake pad and the inner brake pad, and the motor is configured to drive the lead screw shaft to rotate, such that the lead screw nut is movable along an axial direction of the lead screw shaft.

16. A braking system, comprising the electro-mechanical brake caliper according to any one of claims 1-15.
